# EUROPEAN PATENT SPECIFICATION

(11) **EP 3 241 151 B1**
(45) Date of publication and mention of the grant of the patent: **06.11.2024**
(21) Application number: 14830393.6
(22) Date of filing: 29.12.2014
(51) Int. Cl.: G06V 20/64, G06V 40/16

(54) **AN IMAGE FACE PROCESSING METHOD AND APPARATUS**
VERFAHREN UND VORRICHTUNG ZUR VERARBEITUNG EINES GESICHTS AUF EINEM BILD
PROCÉDÉ ET APPAREIL DE TRAITEMENT DE VISAGE DANS UNE IMAGE

(43) Date of publication of application: 08.11.2017
(73) Proprietor: ams International AG, 8645 Jona (CH)
(72) Inventor: RODRIGUEZ, Yann, 1941 Vollèges (CH); MOULIN, François, 1941 Vollèges (CH); PICCAND, Sébastien, 1920 Martigny (CH)
(74) Representative: Viering, Jentschura & Partner mbB Patent- und Rechtsanwälte
(86) International application number: PCT/EP2014/079392
(87) International publication number: WO 2016/107638

(56) References cited:
- EP-A2- 1 211 638
- US-A1- 2011 025 827
- US-A1- 2011 194 762
- ANASOSALU PAVAN KUMAR ET AL: "Compact and Accurate 3-D Face Modeling Using an RGB-D Camera: Let's Open the Door to 3-D Video Conference", 2013 IEEE INTERNATIONAL CONFERENCE ON COMPUTER VISION WORKSHOPS, 2 December 2013 (2013-12-02), pages 67 - 74, XP055783984, ISBN: 978-1-4799-3022-7, Retrieved from the Internet <URL:https://openaccess.thecvf.com/content_iccv_workshops_2013/W02/papers/Anasosalu_Compact_and_Accurate_2013_ICCV_paper.pdf> [retrieved on 20210310], DOI: 10.1109/ICCVW.2013.16
- CARLO DAL MUTTO: "A probabilistic approach to tof and stereo data fusion.", 3DPVT, PARIS, FRANCE 2, 1 January 2010 (2010-01-01), XP055210340, Retrieved from the Internet <URL:http://www.researchgate.net/profile/Carlo_Dal_Mutto/publication/228745267_A_probabilistic_approach_to_tof_and_stereo_data_fusion/links/00b7d516c3359577f1000000.pdf> [retrieved on 20150831]

## Description

### Field of the invention

The present invention relates to an image face processing method and apparatus.

### Description of related art

Image face processing involves the processing of images of the face. Face processing methods may involve for example determination of emotions; face classification; face morphing; pose detection; gaze detection; face detection in complex images; etc.

As an example of face processing, face recognition involves the analysis of data representing a test image (or a set of test images) of a human face and its comparison with a database of reference images. Face recognition is often used in authentication or identification based on images of a face.

The images used in image face processing are commonly 2D RGB images captured with common 2D cameras. Matching test RGB images with reference RGB images is difficult if the images have been captured under different lighting conditions; shadows or brightly areas could change the overall appearance of a face and render the comparison task more difficult.

In order to provide a more robust matching of test images with reference images, it is also known to capture infrared images, in addition or in replacement to RGB images. Infrared images have the advantage of being less affected by different lighting conditions.

In addition, and with the emergence of depth sensors in a variety of consumer devices, such as game consoles, laptops, tablets, smartphones, and cars for example, more and more images of faces includes a depth map. A popular example of a depth sensor that produces RGB-D datasets is the Kinect input device proposed by Microsoft for Xbox 360, Xbox One and Windows PC (all trademarks of Microsoft, Inc). Other depth sensors are based on time-of-flight measurements.

Depth sensors produce 2.5D image datasets including an indication of depth (or distance to the light source) for each pixel of the image, but no indication about hidden or occluded elements, such as the back of the head for example. Some depth sensors also output a confidence map; however, this expression is sometimes used in a misleading way to designate the infrared pixel map, rather than the precision or reliability of depth measure.

Since depth cameras are becoming more popular, it was suggested to use them for face recognition. For example, US6381346 describes a system for generating facial images, indexing those images by composite codes and for searching for similar two-dimensional facial images.

US8406484 B2 concerns a facial recognition apparatus, comprising: a two-dimensional information acquisition unit to acquire two-dimensional image information of a subject; a three-dimensional information acquisition unit to acquire three-dimensional image information of the subject; a user information database to store an elliptical model corresponding to three-dimensional face information of a user and two-dimensional face information of the user; and a control unit to perform facial recognition using the two-dimensional image information of the subject, to determine whether a recognized face is the user's face, to match the elliptical model of the user to the three-dimensional image information, to calculate an error upon determining that the recognized face is the user's face, and to determine whether the user's face is improperly used based on the error.

US8199979 B2 discloses a method for classifying and archiving images including face regions that are acquired with a 2D image acquisition device. A face detection module identifies a group of pixels corresponding to a face region.

However, consumer depth cameras only deliver low resolution and very noisy depth maps, so that the additional depth information does not improve the quality and reliability of the face recognition task as much as one would expect.

The quality and robustness of image processing tasks also depends on the quality of images delivered by the RGB and/or NIR sensors. Some pixels in the RGB and/or NIR images provide only little informative value, or no informative value at all, for example when they are noisy, saturated, over-illuminated, etc.

It has also been found that some parts of the face are less discriminative than other ones, and therefore less useful in a face recognition or classification task. For example, eyes are very discriminative and don't change much over time or between successive frames; by contrast, hairs are less personal, and could change a lot over time or even from one frame to the next. Therefore, it would be useful to develop a face processing method or apparatus exploiting mainly the most discriminative parts of face images, and being less dependent on lesser discriminative pa rts.

US2011/194762A1 discloses a method for discriminating hair regions in a face. The determination whether a pixel belongs to the hair region uses a binary classifier based on a confidence image; this confidence image is determined through a frequency analysis in the 2D gray scale image, and by determining the variance of the depth in a depth map.

EP1211638 A2 discloses a face recognition method using a detection of skin regions. Anasosalu Pavan Kumar et al., "Compact and Accurate 3-D Face Modeling Using an RGB-D Camera: Let's Open the Door to 3-D Video Conference", 2013 IEEE International Conference on Computer Vision (ICCV) Workshops, 2 December 2013 (2013-12-02), pages 67-74, discloses a method for producing an accurate and compact 3-D face model in real time using a low cost RGB-D sensor.

Generally, more robust methods for image face processing would be desirable.

It would also be desirable to provide new methods using the capabilities of depth sensors and RGB-D datasets in order to improve the quality, robustness and/or speed of various face processing tasks.

### Brief summary of the invention

According to the invention, these aims are achieved by means of a face processing method for processing data representing a face, said method being defined in claim 1.

The use of a depth map (i.e. a 2.5D dataset) is advantageous since it improves the precision and robustness of the pose estimation step.

The use of visible light data is advantageous since it allows a detection of features that depends on skin colour or texture for example.

The use of near-infrared (NIR) image data is advantageous since it is less dependent on illumination conditions than visible light data.

This method is based, inter alia, on the founding that a noisy point in the depth map is more likely to be associated with a less discriminative part of the face than with a highly discriminative part of the face. For example, hairs often create a lot of noise in the depth map, and have only a very limited discriminative value. The method thus detects those portions of the face which are covered by hairs and generate noisy points in the depth map, and disregard or underweight the corresponding points of the depth map and/or the corresponding pixels of the 2D RGB or near-infrared pixel map.

Therefore, a confidence value is computed for at least some points of the depth map. This confidence value is useful in order to determine the most discriminative points of the depth map, respectively the most discriminative pixels of the pixel maps. Further face processing methods could use this information for example in order to overweight points or pixels with a high confidence value, and underweight or disregard points or pixels with a low confidence value.

The method is also based on the founding that the noise level and/or the type of noise associated with each point of the depth map is correlated with the informative value of the corresponding pixels of the 2D RGB pixel map.

For example, since noise could be caused by dust on the optic, a noisy point in the depth map is more likely to correspond to a noisy pixel in the RGB pixel map.

Therefore, a confidence value depending, at least in part, on the determination of noise parameter associated with the corresponding point in the depth map could be computed for each pixel of the pixel map.

The noise parameter associated with one point of the depth map may depend on the noise level. It may correspond to the signal-to-noise ratio, or to another value representing the level of noise. The noise parameter may also depend on the type of noise, for example whether it is a random noise, thermal noise, shot noise, flicker noise, etc.

The confidence value could be used, for example, in order to determine which pixels of the pixel map should be used and which one should be discriminated for a given face processing task. It could also be used for weighting different pixels depending on their confidence value.

The confidence value could be used, for example, in order to determine which points of the depth map should be used and which one should be discriminated for a given face processing task. It could also be used for weighting different points depending on their confidence value.

The confidence value associated with a pixel of the RGB pixel map could further depend on other parameters. In one example, the confidence value depends on the saturation level of the pixel in the RGB pixel map.

The confidence value could also depend on the coordinate position of the pixel - pixels near the borders of the image are more likely to be blurred or affected by lens vignetting than pixels near the centre of the image.

The confidence value of a point could also depend on its position in the face. For example, the upper half of a face (except for the hairs) is more discriminative and less mobile than the lower part and mouth region, which are less individual and more likely to move.

The invention, as defined in claim 1, allows to determine a confidence value associated with at least some of the features used in the face processing method, for example features used for classifying data representing images of faces. The computation of the feature confidence value thus depends on the noise parameter associated with each pixel used in the extraction of the feature.

The feature confidence value is used in a face classification method, which is, according to the invention as defined in claim 1, a face recognition method, for discarding less reliable features, i.e. features associated with a low confidence value, and using instead more reliable features associated with a higher confidence value. The feature confidence value could also be used for weighting different features depending on their feature confidence value. Therefore, the contribution of each feature on the result of the face processing method depends on the associated feature confidence value.

In one embodiment, the confidence value associated with a point or pixel could be used for detecting spoofing attempts.

For example, it has been found that a high noise level in the portion of the depth map that correspond to the hair is normal and expected in the case of a real face, while a fake, such as a 2D image of a face, does not produce the same amount of noise in the hairs.

Not only the level of noise, but also its spatial and/or temporal distribution, as well as the type of noise produced by the depth sensor could be used to detect spoofing attempts. For example, a living face, an image of a face on an electronic display, on a paper print, or a latex representation, all produce very different noise levels and type of noise in the depth sensor. Therefore, the level of noise and/or the type of noise associated with each point in the depth map could be used for detecting whether or not the image data is a representation of a living face or if it is typical of a spoofing attack.

In one embodiment, the face processing method of the invention comprises the step of aligning the face depth map with a 3D model of a head of known orientation using an iterative method, in order to find and/or adapt the head pose orientation. The contribution in the iterative method of each point depends on its noise parameter. For example, a robust pose detection could be performed by discarding or underweighting points of the depth associated with a low confidence value and/or high level of noise, and overweighting points associated with a lower noise level.

The head pose may be estimated by fitting the depth map with an existing 3D model, so as to estimate the orientation of the depth map. By discarding oder underweighting points associated with a lower confidence value, this pose estimation is particularly robust.

The face processing method might further comprise a step of correcting the illumination of portions of the 2D RGB pixel map, based on the 2D near-infrared pixel map. Shadows or bright zones in the 2D RGB pixel map that do not appear in the 2D near-infrared pixel map may thus be corrected.

The present invention is also related to an apparatus comprising means for performing the method recited in the claims, said apparatus being defined in claim 9.

Furthermore, the present invention is also related to a computer-program product, which is defined in claim 12.

The method may comprise a step of further processing the 2D projected image.

The acquisition step may comprise a temporal and/or spatial smoothing of points in the depth map, in order to reduce noise generated by the depth sensor. This smoothing may be performed before and/or after the determination of noise parameters associated with each point and with the corresponding pixels.

### Brief Description of the Drawings

The invention will be better understood with the aid of the description of an embodiment given by way of example and illustrated by the figures, in which:
Fig. 1 is a flowchart of the method of the invention.
Fig.2 is a schematic view of an apparatus according to the invention.
Fig. 3 is a schematic view of modules of the apparatus of the invention.
Fig. 4 illustrates an example of a 2D RGB image of a face.
Fig. 5 illustrates an example of a 2D near-infrared image of the face of Figure 3.
Fig. 6 illustrates an example of a representation of a depth map of the face of Figure 3.
Fig. 7 illustrates another example of a pixel map representation of a face.
Fig. 8 illustrates another example of a representation of a depth map of the face of Figure 7.
Fig. 9 illustrates an image of the face of Figure 7 in which pixels associated with a low confidence value have been removed or discarded.
Fig. 10 illustrates a confidence value map corresponding to the pixel map of Figure 7.

### Detailed Description of possible embodiments of the Invention

The detailed description set forth below in connection with the appended drawings is intended as a description of various embodiments of the present invention and is not intended to represent the only aspects in which the present disclosure may be practiced. Each aspect described in this disclosure is provided merely as an example or illustration of the present invention, and should not necessarily be construed as preferred or essential.

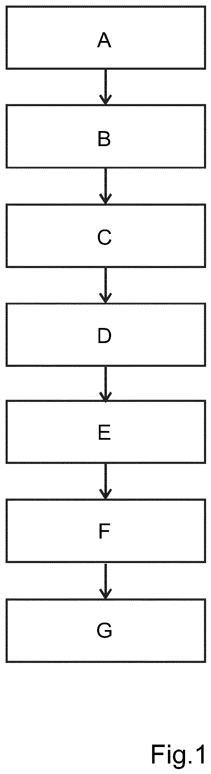

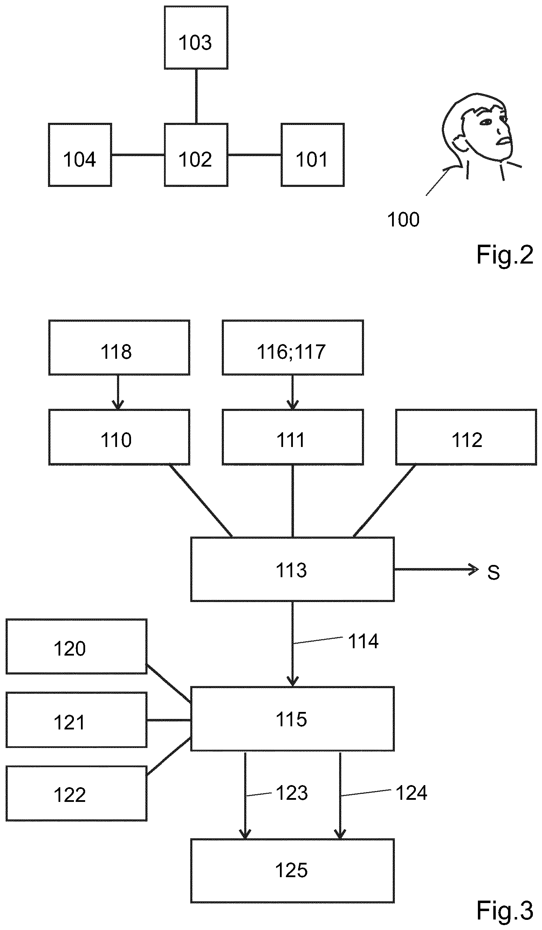

Figure 1 is a flowchart that schematically illustrates the main steps of an example of pose rectification method according to the invention. This method could be carried out with the apparatus or system schematically illustrated as a block diagram on Figure 2. In this example, the apparatus comprises a camera 101 for capturing an image of a user 100. The camera 101 might be a depth camera, such as without restriction a Kinect camera (trademark of Microsoft), a time-of-flight camera, or any other camera able to generate a RGB-D data stream.

The camera 101 is connected to a processor 102 accessing a memory 104 and connected to a network over a network interface 103. The memory 104 may include a permanent memory portion for storing computer-code causing the processor to carry out at least some steps of the method of Figure 1. The memory 104, or portions of the memory 104, might be removable.

As used herein, the apparatus 101+102+104 may take the form of a mobile phone, personal navigation device, personal information manager (PIM), car equipment, gaming device, personal digital assistant (PDA), laptop, tablet, notebook and/or handheld computer, smart glass, smart watch, smartTV, other wearable device, etc.

In acquisition step A of Figure 1, a video stream is produced by the depth camera 101 in order to acquire a stream of frames of the face of user 100 to that one wants to process, for example in order to identify, classify or otherwise process. The images might be "test images", i.e. images of a face that one wants to classify, or "reference images", i.e., images captured during an enrolment process and with which future test images will be compared.

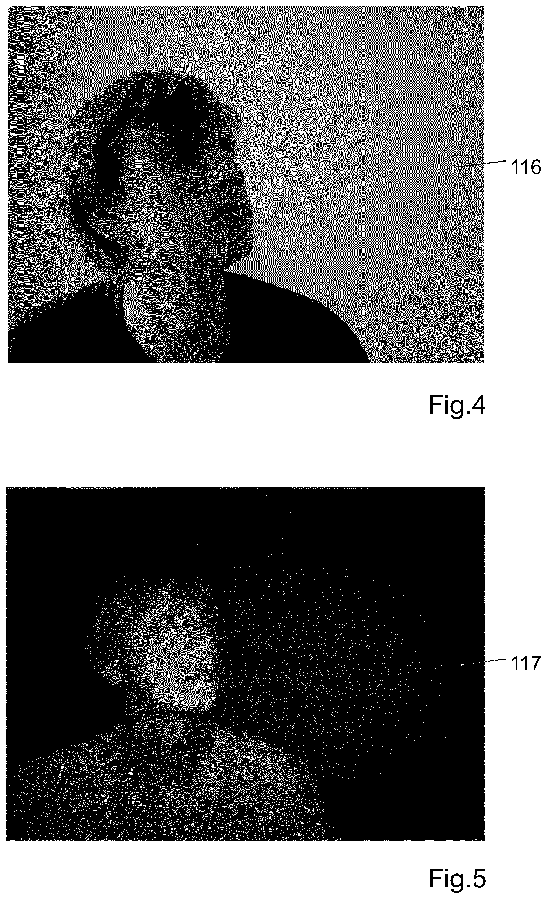

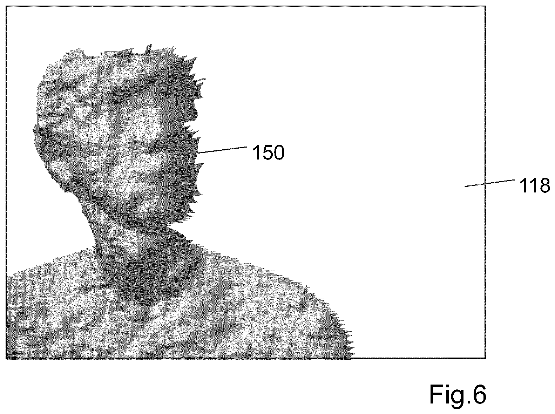

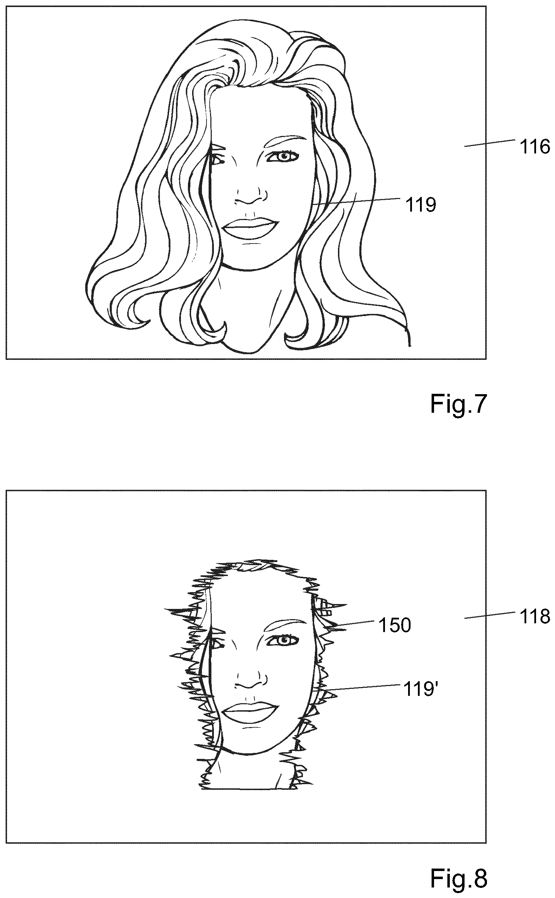

Each frame of the video stream preferably includes three temporally and spatially aligned datasets:
i) a first dataset corresponding to a two dimensional (2D) RGB or greyscale pixel map 116. Examples are illustrated on Figures 4 and schematically on Figure 7.
ii) a second (optional) dataset 117 corresponding to a 2D near-infrared (NIR) pixel map. One example is illustrated on Figure 5.
iii) a depth map 118 (i.e. a 2.5D dataset) where the value associated with each point depends on the depth of the light emitting source, i.e. its distance to the depth sensor in the camera 101. A possible representation of such a depth map is illustrated on Figure 6. Another representation is schematically illustrated on Figure 8.

The resolution of those three maps could be different. Some depth sensors for example deliver a relatively high resolution RGB pixel map, and a lower resolution depth map. For most sensors, the correspondence between those different maps is known so that one knows for example which pixels of the 2D RGB pixel map are associated with one given point of the depth map.

During step B, the level of noise that remains after this optional smoothing step is determined for each point of the depth map. Some depth sensors directly deliver this noise level for each point, for example based on difference values between successive measures, such as successive time-of-flight values for one point in one frame. Alternatively, the noise level may be determined by evaluating the signal-to-noise ratio associated with each point. The noise level for a given point may be determined by measuring the high frequency temporal variations of the depth value, for example variations of depth value of each point between successive frames; variations with a high frequency and/or intensity are likely to be caused by noise. Alternatively, the noise level for a given point may be determined by measuring the high frequency spatial variations of the depth value, for example difference of depth value between each point and its neighbours; fast and high intensity spatial variations of depth values are more likely to be caused by noise.

The noise level could be determined individually for each point or for groups of neighbouring points.

In addition to the noise level, the type of noise could also be determined during step B. For example, a module could determine that the noise associated with a given point is Gaussian in the spatial and/or temporal domain; its average and standard deviation could also be determined in the spatial and/or temporal domain. The spatial and/or temporal frequency of the signal and noise could also be determined.

In the following of the description and in the claims, the expression "noise parameter" will be used for designating the noise value and/or the noise type associated with each point of the depth map.

In step C, the noise parameter associated with each point of the depth map is used to determine a confidence value associated with the point and with corresponding pixels in the 2D RGB pixel map 118. A point associated with a high level of noise in the depth map is unreliable and it is likely that the corresponding pixel in the pixel map is unreliable as well. For example, the depth values of portions of the face covered by hairs are often very noisy, with a characteristic noise pattern, as can be seen with reference 150 on Figures 6 or 8. The corresponding points in the depth map are thus associated with a low confidence value. The confidence value may also depend on the type of noise; some noise types are more likely to be present simultaneously in the depth map and in the 2D RGB pixel map.

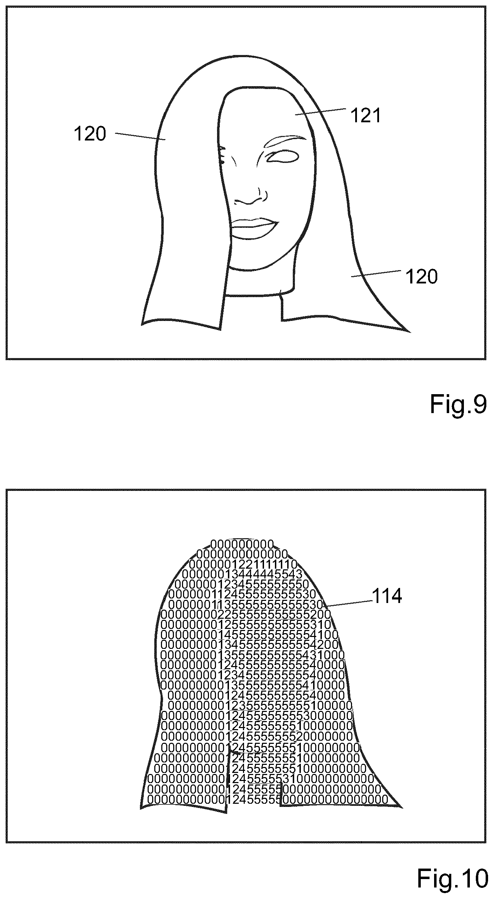

A noise based confidence value map 114 can thus be generated, as illustrated on Figure 10, in which the value associated with each pixel of the RGB pixel map is computed from the noise level of the corresponding point in the depth map, and indicates the confidence value associated with this pixel. Please note that this confidence map is not equivalent to the 2D near-infrared pixel map and could not be determined from the 2D NIR pixel map only; it has nothing to do with the infrared output that some depth sensors, such as Kinect ^{®} sensors, call "confidence map" although it merely returns the infrared intensity associated with each point.

The (noise based) confidence value associated with each point or pixel could be expressed as a multidigit numerical value. Figure 9 shows a pixel map in which only the pixels in regions 121 associated with a confidence value higher than a threshold are maintained; pixels in regions 120 with a lower confidence value are discarded, and possibly flagged as such.

The confidence value associated with each pixel could also depend on other parameters than the noise level of the corresponding point in the depth map. In one example, the confidence value depends on a saturation level of the pixel in the RGB pixel map and/or in the NIR pixel map. Highly saturated pixels, or black pixels, are then associated with a lower confidence value than pixels near the middle of the dynamic range.

The confidence value could also depend on the coordinate position of the pixel - pixels near the borders of the image are more likely to be blurred or affected by lens vignetting than pixels near the centre of the image.

The confidence value of a point could also depend on its position in the face. For example, the upper half of a face (except for the hairs) is more discriminative and less mobile than the lower part and mouth region, which are less individual and more likely to move.

Transitions zones where the depth value rapidly changes, for example borders of the nose or glasses in a frontal view of the face, are also less reliable and associated with a lower confidence than regions of more constant depth, such as cheeks or forehead, which generate less noise in the depth map

Some basic image transformation could be performed on the 2D RGB pixel map, on the NIR pixel map and/or on the depth map. In one example, this basic processing includes an automatic illumination, contrast and/or white balance adaptation. Preferably, the illumination of portions of the 2D RGB pixel map is corrected based on the 2D NIR pixel map. Shadows or bright zones in the 2D RGB pixel map that do not appear in the 2D near-infrared pixel map are thus corrected by creating a RGB image where the brightness value of each pixel of the RGB pixel map depends on the brightness value in the NIR pixel map.

The basic image transformation could also include a scaling or cropping of the pixel maps, for example in order to isolate the portion of the 2D pixel maps that correspond to a face and exclude other portions. In one embodiment, this basic face detection is based, at least in part, on a thresholding of the depth map, in order to exclude pixels which are not in a predefined depth range, for example between 20 cm and 100 cm. Other known algorithms could be used for extracting the foreground that represents the user face, and excluding the background, including for example algorithms based on colour detection.

The basic image transformation could also include a warping of the 2D image in order to project it in a frontal pose.

Alternatively, the basic image transformation includes a projection of the 2D RGB and/or NIR pixel maps 116, 117 onto a 3D model of the face corresponding to the depth map 118, so as to generate a high resolution textured 3D model of the face in which the depth value of each point depends on the depth map and the brightness and colour value depends on the brightness and colour value of the corresponding pixels in the RGB and/or NIR pixel maps.

This textured 3D model could then be projected onto a 2D image of the face with a different head pose, for example with a frontal pose, for an easier matching with 2D reference images of faces with the same head pose. Various projections could be considered. At first, deformations caused by the camera and/or by perspective are preferably compensated. Then, in one embodiment, the projection generates a frontal facial image, i.e. a 2D image as seen from a viewer in front of the user 100. It is also possible to generate a non-frontal facial image, or a plurality of 2D projections, such as for example one frontal facial projection and one another profile projection. Other projections could be considered, including cartographic projections, or projections that introduce deformations in order to magnify discriminative parts of the face, in particular the eyes, the upper half of the face, and reduce the size of more deformable parts of the face, such as the mouth. It is also possible to morph the head to a generic model before comparison, in order to facilitate comparison. Purely mathematical projections, such as projections onto not easily representable space, could also be considered. Hidden parts, for example portions of the user's face which were hidden or occluded in the depth map, are either flagged as invalid, or reconstructed, for example by supposing a symmetry of the user's face. Alternatively, or in addition, the reconstruction may use a generic model of a head. Alternatively, or in addition, the reconstruction may use image portion data available from other frames in the same video sequence.

In one embodiment, the textured 3D model is used as such for a direct comparison and matching with reference textured 3D models.

The basic image transformation generates a modified pixel map or a textured depth map with modified pixels computed from the initial pixel map. The confidence value associated with those modified points or pixels is derived from the confidence value associated with the initial points or pixels. For example, in the case of image scaling including an interpolation or averaging step, the value of the confidence value associated with a new pixel depends on the confidence value associated with the initial pixels used in the interpolation or averaging.

In step D Figure 1, features are extracted from the possibly transformed RGB pixel map and/or from the possibly transformed NIR pixel map and/or from the possibly textured depth map. If pixels associated with a low confidence value have been previously discarded, as illustrated on Figure 9, those pixels are not used in the feature extraction process, resulting in a faster feature extraction.

Features are informative portions of the pixel map, or values derived from a plurality of pixels, which can then be used by a further image processing method, for example in order to recognize or classify a face. Feature extraction may use a number of algorithms, such as without limitation edge detection, corner detection, change of plane detection, blob detection, ridge detection, and so on. The number of features extracted from a typical pixel map of a face could be high, and include for example hundredths or thousands of features.

In step E, a feature confidence value is determined for at least some of the previously extracted features. The computation of each feature confidence value depends on the confidence value associated with pixels used in the extraction of the feature. For example, the computation of the feature confidence value could include an averaging or weighted averaging of the confidence values of pixels used for extracting this feature. Therefore, in the example of Figures 7 and 8, the feature 119 obtained by extracting a portion of edge of the face 119 is associated with a low feature confidence value, because the noise level of corresponding points 119' in the depth map has a high noise level generated by the hairs covering this portion of the face.

The feature confidence value could also depend on other parameters, including for example the type of feature, and/or the number of pixels used for extracting this feature, etc.

The extracted features are then used in step G by a classifying module in order to classify the face represented by the pixel maps and by the depth map.

The classifying module could be a user identification or authentication module, or a gender estimation module, an age estimation module, etc. The classification may be based on a single frame, for example a frame which can be classified with the highest reliability, or with the first frame which can be classified with a reliability higher than a given threshold, or on a plurality of successive frames of the same video stream.

The use of the different features by the classifying module depends on their associated feature confidence value. For example, features associated with a confidence value lower than a predetermined threshold could be discarded. The contribution of remaining features may be weighted depending on their feature confidence value, so as to increase the contribution in the classifying algorithm of the features associated with a high confidence value, and to reduce the contribution of features associated with a lower feature confidence value.

In one embodiment, the confidence value associated with each point of the depth map is used for the head pose estimation or head pose correction. In one embodiment, this estimation is performed in two successive steps:

During a first part of the head pose estimation step, a rough estimate of the head pose is determined. In one embodiment, the computation of this rough estimate uses a random forest algorithm, in order to quickly determine the head pose with a precision of a few degrees. A method of rough head pose estimation with random regression forest is disclosed in G. Fanelli et al., "Real Time Head Pose Estimation with Random Regression Forests", Computer Vision and Pattern Recognition (CVPR), 2011 IEEE Conference on, 617-624. Preferably, the location of the nose and/or of other key features of the face is also determined during this step.

During a second part of the head pose estimation, a finer estimate of the head pose is determined. This fine estimate could start from the previously determined rough estimate of the orientation and of the location of one point, such as nose location, in order to improve the speed and robustness. The fine estimate could be computed by determining the orientation of a 3D model of a head that best corresponds to the depth map. In one example, the matching of the 3D model to the test depth map may be performed by minimizing a distance function between points of the depth map and corresponding points of the 3D model, for example using an Iterative Closest Point (ICP) method. The contribution in the method of each point of the captured depth map depends on its confidence value; points associated with a high noise and low confidence value are discarded or underweighted, while points of the depth map associated with a higher confidence value are overweighted. This results in an estimation of head pose in which the position of hairs or other areas associated with a low confidence value is underweighted.

The output of the head pose estimation step may include a set of angles phi, theta, psi describing three rotations with regard to a given coordinate system.

Figure 3 schematically illustrates some components of a software and/or hardware module that could be used to implement the method of the present invention. The module comprises a component 110 that determines the noise parameter, i.e., the level and/or type of noise associated with each point of a depth map 118 (or sequence of depth maps). An optional component 111 determines the saturation level of each pixel of the 2D RGB and/or NIR pixel map 116 resp. 117. Another optional component 112 delivers additional data that could be used in order to determine a confidence value associated with each pixel.

A confidence value determination module 113 receives the data output by the modules 110, 111 and/or 112, and determine from those parameters a confidence value associated with each point of the depth map 118 and/or with each pixel of the RGB and/or NIR pixel map 116, 117. If one point of the depth map corresponds to a plurality of pixels in the pixel map, the noise level associated with this point will be used in the determination of the confidence value of each of those corresponding pixels.

The module 113 may also detect a spoofing attack based on the parameters received from the modules 110, 111 and/or 112. For example, a depth map generated from a living face, from a paper print, from a computer display or from a latex mask will all generate different levels of noise and distinctive types of noise in different regions of the image. The noise parameter associated with various portions of the image could thus be used by the confidence value determination module 113 in order to generate a signal S that will interrupt the face processing when a spoofing attempts has been detected.

If no spoofing attempt has been detected, the module 113 generates a confidence map 114 in which each value corresponds to one pixel of the 2D RGB and/or NIR pixel map and indicates a confidence value associated with the corresponding pixel. This confidence map is transmitted to a feature extraction module 115, along with the RGB pixel map 114, with the NIR map 117 and with the depth map 118.

The feature extraction module 115 extracts a number of features 123 from the three maps 116-118, and computes associated feature confidence values 124 based on the confidence value of the pixels used in the determination of the individual features. The features 123 and the associated feature confidence values are then transmitted to a face processing module 125 that will process those features for example in order to classify, identify, authenticate or otherwise process the face, whereas a more important weight will be given in this processing to features associated with a high confidence value than to features associated with a lower confidence value.

The methods disclosed herein comprise one or more steps or actions for achieving the described method. Unless a specific order of steps or actions is specified, the order and/or use of specific steps and/or actions may be modified, provided that the above fall within the scope of the claims.

It is to be recognized that depending on the embodiment, certain acts or events or steps of any of the methods described herein can be performed in a different sequence, may be added, merged, or left out all together (e.g., not all described acts or events are necessary for the practice of the method). Moreover, in certain embodiments, acts or events may be performed concurrently, e.g., through multi-threaded processing, interrupt processing, or multiple processors, rather than sequentially.

The various operations of methods described above may be performed by any suitable means capable of performing the corresponding functions. The means may include various hardware and/or software component(s) and/or module(s), including, but not limited to a circuit, an application specific integrate circuit (ASIC), a processor, a field programmable gate array signal (FPGA) or other programmable logic device (PLD), discrete gate or transistor logic, discrete hardware components or any combination thereof designed to carry out the method steps described herein.

As used herein, the terms "determining" and "estimating" encompass a wide variety of actions. For example, "determining" and "estimating" may include calculating, computing, processing, deriving, looking up (e.g., looking up in a table, a database or another data structure), ascertaining and the like. Also, "determining" and "estimating" may include receiving, accessing (e.g., accessing data in a memory) and the like.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein.

Various modifications and variations to the described embodiments of the invention will be apparent to those skilled in the art, provided that these fall within the scope of the appended claims. Although the invention has been described in connection with specific preferred embodiments, it should be understood that the invention as claimed should not be unduly limited to such specific embodiment, the scope of the invention being defined by the appended claims.

## Claims

1. A face processing method, comprising the steps of:
A - acquiring a least one frame including a 2D RGB pixel map (116) representing a face, a depth map (118) representing said face, and optionally a 2D near-infrared pixel map (117) representing said face;
B - determining a noise parameter associated with at least some points in said depth map (118), the noise parameter designating a noise level associated with each respective point in the depth map (118);
C - using the noise parameters associated with said points for determining a confidence value associated with corresponding pixels of the 2D RGB pixel map (116);
D - extracting one or more features (123) of the face based on a plurality of pixels of said 2D RGB pixel map (116);
E - using the confidence value associated with said plurality of pixels for determining a feature confidence values associated with said one or more features (123);
F - discarding features (123) associated with a feature confidence value lower than a predetermined threshold value;
G - using at least some of the remaining features (123) for face recognition.

2. The method of claim 1, said step C including determination of said confidence value associated with said corresponding pixels of the 2D RGB pixel map.

3. The method of claim 2, the confidence value of a pixel further depending on a saturation level of said pixel.

4. The face processing method of claim 1, further comprising: using at least some of the features (123) for face recognition, wherein the contribution of each feature depends on the associated feature confidence value.

5. The face processing method of one of the claims 1 to 4, further comprising:
detecting a spoofing attempt, wherein detecting a spoofing attempt comprises determining whether the noise parameter associated with one or more points in the depth map corresponds to a noise parameter expected for a depth map representing a real face.

6. The face processing method of claim 1, further comprising:
aligning said depth map with a 3D model of a head of known orientation using an iterative method,
wherein the contribution in said iterative method of each said point depends on its noise parameter.

7. The method of one of the claims 1 to 6, further comprising a step of correcting the illumination of portions of said 2D RGB pixel map based on said 2D near-infrared pixel map.

8. The method of any one of the preceding claims, wherein determining the noise parameter further comprises determining a noise type.

9. An apparatus comprising means for performing the method of any one of the preceding claims.

10. An apparatus comprising a depth map camera (101) arranged for acquiring test frames, wherein each frame includes a 2D RGB pixel map (116), a depth map (118), and optionally a 2D near-infrared pixel map (117), the apparatus further comprising a processor (102) with a memory (104) storing a program that causes said processor to carry out following steps when the program is executed:
A - acquiring a least one frame representing a face;
B - determining a noise parameter associated with at least some points in said depth map (118), the noise parameter designating a noise level associated with each respective point in the depth map (118);
C - using the noise parameters associated with said points for determining a confidence value associated with corresponding pixels of the 2D RGB pixel map (116);
D - extracting one or more features (123) of the face based on a plurality of pixels of said 2D RGB pixel map (116);
E - using the confidence value associated with said plurality of pixels for determining a feature confidence values associated with said one or more features (123);
F - discarding features (123) associated with a feature confidence value lower than a predetermined threshold value;
G - using at least some of the remaining features (123) for face recognition.

11. The apparatus of claim 10, said step C including determination of said corresponding pixels of the 2D RGB pixel map.

12. A computer-program product, comprising a computer readable medium comprising instructions executable to:
A - acquire a least one frame including a 2D RGB pixel map (116) representing a face, a depth map (118), and optionally a 2D near-infrared pixel map (117);
B - determine a noise parameter associated with at least some points in said depth map (118), the noise parameter designating a noise level associated with each respective point in the depth map (118);
C - use the noise parameters associated with said points for determining a confidence value associated with corresponding pixels of the 2D RGB pixel map (116);
D - extract one or more features (123) of the face based on a plurality of pixels of said 2D RGB pixel map (116);
E - use the confidence value associated with said plurality of pixels for determining a feature confidence values associated with said one or more features (123);
F - discard features (123) associated with a feature confidence value lower than a predetermined threshold value;
G - use at least some of the remaining features (123) for face recognition.

13. The product of claim 12, said step C including determination of said confidence value associated with said corresponding pixels of the 2D RGB pixel map.

## Patentansprüche

1. Gesichtsverarbeitungsverfahren aufweisend die Schritte:
A - Erfassen mindestens eines Frames, das eine 2D-RGB-Pixelkarte (116), die ein Gesicht darstellt, eine Tiefenkarte (118), die das Gesicht darstellt, und optional eine 2D-Nahinfrarot-Pixelkarte (117), die das Gesicht darstellt, aufweist;
B - Ermitteln eines Rauschparameters, der zu mindestens einigen Punkten in der Tiefenkarte (118) zugeordnet ist, wobei der Rauschparameter einen Rauschpegel bezeichnet, der jedem jeweiligen Punkt in der Tiefenkarte (118) zugeordnet ist;
C - Verwenden der den Punkten zugeordneten Rauschparameter zum Ermitteln eines Konfidenzwertes, der den entsprechenden Pixeln der 2D-RGB-Pixelkarte (116) zugeordnet ist;
D - Extrahieren eines oder mehrerer Merkmale (123) des Gesichts auf der Grundlage einer Vielzahl von Pixeln der 2D-RGB-Pixelkarte (116);
E - Verwenden des Konfidenzwertes, der der Vielzahl von Pixeln zugeordnet ist, zum Ermitteln eines Merkmalskonfidenzwertes, der dem einen oder den mehreren Merkmalen (123) zugeordnet ist;
F - Verwerfen von Merkmalen (123), die einem Merkmalskonfidenzwert zugeordnet sind, der unter einem vorgegebenen Schwellenwert liegt;
G - Verwenden zumindest einiger der verbleibenden Merkmale (123) für die Gesichtserkennung.

2. Verfahren nach Anspruch 1, wobei der Schritt C das Ermitteln des Konfidenzwertes aufweist, der den entsprechenden Pixeln der 2D-RGB-Pixelkarte zugeordnet ist.

3. Verfahren nach Anspruch 2, wobei der Konfidenzwert eines Pixels ferner von einem Sättigungsgrad des Pixels abhängt.

4. Verfahren nach Anspruch 1 ferner aufweisend: Verwenden mindestens einiger der Merkmale (123) zur Gesichtserkennung, wobei der Beitrag jedes Merkmals von dem zugehörigen Merkmalskonfidenzwert abhängt.

5. Verfahren nach einem der Ansprüche 1 bis 4, das ferner aufweisend ist: Erkennen eines Fälschungsversuchs, wobei das Erkennen eines Fälschungsversuchs das Ermitteln aufweist, ob der Rauschparameter, der mit einem oder mehreren Punkten in der Tiefenkarte zugeordnet ist, zu einem Rauschparameter korrespondiert, der für eine Tiefenkarte erwartet wird, die ein echtes Gesicht darstellt.

6. Verfahren nach Anspruch 1, ferner aufweisend:
Ausrichten der Tiefenkarte mit einem 3D-Modell eines Kopfes mit bekannter Ausrichtung unter Verwendung eines iterativen Verfahrens,
wobei der Beitrag eines jeden Punktes in dem iterativen Verfahren von seinem Rauschparameter abhängt.

7. Verfahren nach einem der Ansprüche 1 bis 6, ferner aufweisend einen Schritt des Korrigierens der Beleuchtung von Teilen der 2D-RGB-Pixelkarte auf der Grundlage der 2D-Nahinfrarot-Pixelkarte.

8. Verfahren nach einem der vorhergehenden Ansprüche, wobei das Ermitteln des Rauschparameters ferner das Ermitteln eines Rauschtyps aufweist.

9. Vorrichtung aufweisend Mittel zum Durchführen des Verfahrens nach einem der vorhergehenden Ansprüche.

10. Vorrichtung aufweisend eine Tiefenkartenkamera (101), die zum Erfassen von Test-Frames angeordnet ist, wobei jedes Frame eine 2D-RGB-Pixelkarte (116), eine Tiefenkarte (118) und optional eine 2D-Nahinfrarot-Pixelkarte (117) aufweist,
die Vorrichtung ferner einen Prozessor (102) mit einem Speicher (104) aufweist, der ein Programm speichert, das den Prozessor veranlasst, die folgenden Schritte auszuführen, wenn das Programm ausgeführt wird:
A - Erfassen mindestens eines Frames, das eine 2D-RGB-Pixelkarte (116), die ein Gesicht darstellt, eine Tiefenkarte (118), die das Gesicht darstellt, und optional eine 2D-Nahinfrarot-Pixelkarte (117), die das Gesicht darstellt, aufweist;
B - Ermitteln eines Rauschparameters, der zu mindestens einigen Punkten in der Tiefenkarte (118) zugeordnet ist, wobei der Rauschparameter einen Rauschpegel bezeichnet, der jedem jeweiligen Punkt in der Tiefenkarte (118) zugeordnet ist;
C - Verwenden der den Punkten zugeordneten Rauschparameter zum Ermitteln eines Konfidenzwertes, der den entsprechenden Pixeln der 2D-RGB-Pixelkarte (116) zugeordnet ist;
D - Extrahieren eines oder mehrerer Merkmale (123) des Gesichts auf der Grundlage einer Vielzahl von Pixeln der 2D-RGB-Pixelkarte (116);
E - Verwenden des Konfidenzwertes, der der Vielzahl von Pixeln zugeordnet ist, zum Ermitteln eines Merkmalskonfidenzwertes, der dem einen oder den mehreren Merkmalen (123) zugeordnet ist;
F - Verwerfen von Merkmalen (123), die einem Merkmalskonfidenzwert zugeordnet sind, der unter einem vorgegebenen Schwellenwert liegt;
G - Verwenden zumindest einiger der verbleibenden Merkmale (123) für die Gesichtserkennung.

11. Gerät nach Anspruch 10, wobei der Schritt C das Ermitteln des Konfidenzwertes aufweist, der den entsprechenden Pixeln der 2D-RGB-Pixelkarte zugeordnet ist.

12. Computerprogrammprodukt, aufweisend ein computerlesbares Medium mit Anweisungen, die ausführbar sind, zum:
A - Erfassen mindestens eines Frames, das eine 2D-RGB-Pixelkarte (116), die ein Gesicht darstellt, eine Tiefenkarte (118), die das Gesicht darstellt, und optional eine 2D-Nahinfrarot-Pixelkarte (117), die das Gesicht darstellt, aufweist;
B - Ermitteln eines Rauschparameters, der zu mindestens einigen Punkten in der Tiefenkarte (118) zugeordnet ist, wobei der Rauschparameter einen Rauschpegel bezeichnet, der jedem jeweiligen Punkt in der Tiefenkarte (118) zugeordnet ist;
C - Verwenden der den Punkten zugeordneten Rauschparameter zum Ermitteln eines Konfidenzwertes, der den entsprechenden Pixeln der 2D-RGB-Pixelkarte (116) zugeordnet ist;
D - Extrahieren eines oder mehrerer Merkmale (123) des Gesichts auf der Grundlage einer Vielzahl von Pixeln der 2D-RGB-Pixelkarte (116);
E - Verwenden des Konfidenzwertes, der der Vielzahl von Pixeln zugeordnet ist, zum Ermitteln eines Merkmalskonfidenzwertes, der dem einen oder den mehreren Merkmalen (123) zugeordnet ist;
F - Verwerfen von Merkmalen (123), die einem Merkmalskonfidenzwert zugeordnet sind, der unter einem vorgegebenen Schwellenwert liegt;
G - Verwenden zumindest einiger der verbleibenden Merkmale (123) für die Gesichtserkennung.

13. Produkt nach Anspruch 12, wobei der Schritt C das Ermitteln des Konfidenzwertes aufweist, der den entsprechenden Pixeln der 2D-RGB-Pixelkarte zugeordnet ist.

## Revendications

1. Procédé de traitement de visage, comprenant les étapes suivantes :
A - l'acquisition d'au moins une trame comprenant une carte de pixels RVB 2D (116) représentant un visage, une carte de profondeur (118) représentant ledit visage, et éventuellement une carte de pixels proche infrarouge 2D (117) représentant ledit visage ;
B - la détermination d'un paramètre de bruit associé à au moins certains points dans ladite carte de profondeur (118), le paramètre de bruit désignant un niveau de bruit associé à chaque point respectif dans la carte de profondeur (118) ;
C - l'utilisation des paramètres de bruit associés auxdits points pour déterminer une valeur de confiance associée à des pixels correspondants de la carte de pixels RVB 2D (116) ;
D - l'extraction d'une ou de plusieurs caractéristiques (123) du visage sur la base d'une pluralité de pixels de ladite carte de pixels RVB 2D (116) ;
E - l'utilisation de la valeur de confiance associée à ladite pluralité de pixels pour déterminer une valeur de confiance de caractéristique associée à ladite une ou auxdites plusieurs caractéristiques (123) ;
F - le rejet de caractéristiques (123) associées à une valeur de confiance de caractéristique inférieure à une valeur seuil prédéterminée ;
G - l'utilisation d'au moins quelques-unes des caractéristiques restantes (123) pour la reconnaissance faciale.

2. Procédé selon la revendication 1, dans lequel ladite étape C comprend la détermination de ladite valeur de confiance associée auxdits pixels correspondants de la carte de pixels RVB 2D.

3. Procédé selon la revendication 2, la valeur de confiance d'un pixel dépendant en outre d'un niveau de saturation dudit pixel.

4. Procédé de traitement de visage selon la revendication 1, comprenant en outre : l'utilisation d'au moins quelques-unes des caractéristiques (123) pour la reconnaissance faciale, où la contribution de chaque caractéristique dépend de la valeur de confiance de caractéristique associée.

5. Procédé de traitement de visage selon l'une des revendications 1 à 4, comprenant en outre :
la détection d'une tentative d'usurpation, où la détection d'une tentative d'usurpation consiste à déterminer si le paramètre de bruit associé à un ou plusieurs points dans la carte de profondeur correspond à un paramètre de bruit attendu pour une carte de profondeur représentant un vrai visage.

6. Procédé de traitement de visage selon la revendication 1, comprenant en outre :
l'alignement de ladite carte de profondeur avec un modèle 3D d'une tête d'orientation connue en utilisant un procédé itératif,
dans lequel la contribution dans ledit procédé itératif de chaque dit point dépend de son paramètre de bruit.

7. Procédé selon l'une des revendications 1 à 6, comprenant en outre une étape de correction de l'illumination de parties de ladite carte de pixels RVB 2D sur la base de ladite carte de pixels proche infrarouge 2D.

8. Procédé selon l'une quelconque des revendications précédentes, dans lequel la détermination du paramètre de bruit comprend en outre la détermination d'un type de bruit.

9. Appareil comprenant des moyens pour exécuter le procédé selon l'une quelconque des revendications précédentes.

10. Appareil comprenant une caméra de carte de profondeur (101) agencée pour acquérir des trames de test, dans lequel chaque trame comprend une carte de pixels RVB 2D (116), une carte de profondeur (118), et éventuellement une carte de pixels proche infrarouge 2D (117), l'appareil comprenant en outre un processeur (102) doté d'une mémoire (104) stockant un programme qui amène ledit processeur à effectuer les étapes suivantes lorsque le programme est exécuté :
A - l'acquisition d'au moins une trame représentant un visage ;
B - la détermination d'un paramètre de bruit associé à au moins certains points dans ladite carte de profondeur (118), le paramètre de bruit désignant un niveau de bruit associé à chaque point respectif dans la carte de profondeur (118) ;
C - l'utilisation des paramètres de bruit associés auxdits points pour déterminer une valeur de confiance associée à des pixels correspondants de la carte de pixels RVB 2D (116) ;
D - l'extraction d'une ou de plusieurs caractéristiques (123) du visage sur la base d'une pluralité de pixels de ladite carte de pixels RVB 2D (116) ;
E - l'utilisation de la valeur de confiance associée à ladite pluralité de pixels pour déterminer une valeur de confiance de caractéristique associée à ladite une ou auxdites plusieurs caractéristiques (123) ;
F - le rejet de caractéristiques (123) associées à une valeur de confiance de caractéristique inférieure à une valeur seuil prédéterminée ;
G - l'utilisation d'au moins quelques-unes des caractéristiques restantes (123) pour la reconnaissance faciale.

11. Appareil selon la revendication 10, ladite étape C comprenant la détermination desdits pixels correspondants de la carte de pixels RVB 2D.

12. Produit de programme informatique, comprenant un support lisible par ordinateur comprenant des instructions exécutables pour :
A - acquérir au moins une trame comprenant une carte de pixels RVB 2D (116) représentant un visage, une carte de profondeur (118), et éventuellement une carte de pixels proche infrarouge 2D (117) ;
B - déterminer un paramètre de bruit associé à au moins certains points dans ladite carte de profondeur (118), le paramètre de bruit désignant un niveau de bruit associé à chaque point respectif dans la carte de profondeur (118) ;
C - utiliser les paramètres de bruit associés auxdits points pour déterminer une valeur de confiance associée à des pixels correspondants de la carte de pixels RVB 2D (116) ;
D - extraire une ou plusieurs caractéristiques (123) du visage sur la base d'une pluralité de pixels de ladite carte de pixels RVB 2D (116) ;
E - utiliser la valeur de confiance associée à ladite pluralité de pixels pour déterminer une valeur de confiance de caractéristique associée à ladite une ou auxdites plusieurs caractéristiques (123) ;
F - rejeter des caractéristiques (123) associées à une valeur de confiance de caractéristique inférieure à une valeur seuil prédéterminée ;
G - utiliser au moins quelques-unes des caractéristiques restantes (123) pour la reconnaissance faciale.

13. Produit selon la revendication 12, ladite étape C comprenant la détermination de ladite valeur de confiance associée auxdits pixels correspondants de la carte de pixels RVB 2D.
